# EUROPEAN PATENT APPLICATION

(11) **EP 4 575 695 A2**
(43) Date of publication of application: **25.06.2025**
(21) Application number: 24386141.6
(22) Date of filing: 13.12.2024
(51) Int. Cl.: G05D 1/229, G05D 1/248, G05D 1/698

(54) **UNMANNED AERIAL CONTROL POINT SWARM SYSTEM FOR PRECISION MAPPING**

(30) Priority: 21.12.2023 GR 20230101066
(71) Applicant: TECHNICAL UNIVERSITY OF CRETE, 73100 Chania, Crete (GR)
(72) Inventor: Partsinevelos, Panagiotis, 73100 Chania (GR); Petrakis, Georgios, 71305 Iraklio (GR); Bikos, Efstathios, 73007 Chania (GR); Charokopos, Zisis, 74133 Rethimno (GR); Antonopoulos, Angelos, 15561 Holargos Attikis (GR); Brempou, Christina, 73100 Chania (GR)
(74) Representative: Panagiotidou, Effimia

(57) **Abstract**

A swarm of unmanned vehicles - drones, which, after specific interventions, achieves optimal and easy distribution, measurement and recall of control points in mapping applications, performing steps of a specific method of sharing control points. Unmanned vehicles are designed to be autonomous targets or carry an implemented autonomous targeting system and act all together as a swarm or, where preferred, can act individually. The use of the unmanned aerial vehicle as a control point assists mapping, navigation or targeting methodologies by linking measurements to a given reference system and/or improving the results of mapping, or coordinate determination, or positioning.

## Description

The invention belongs to the field of mapping and in particular to the field of precision mapping with methodologies where the use of control points is mandatory or auxiliary, such as in the science of photogrammetry.

In engineering and geotechnical studies projects, but also in general projects that concern the mapping of the natural earth surface and objects on it, the process of geometric documentation of precision and mapping of the study area is extremely important. Mapping operations differ in terms of equipment, analytical methodology, time and personnel required, safety of the process and the study area, and the quality and accuracy of the results required and provided. When it is required, a) to link the mapping measurements to a specific coordinate system, b) to improve the geometric accuracy provided, c) to be able to assess the accuracy of the mapping product produced, then the use of Ground Control Points (GCPs) is often used. GCPs are essentially targets, implemented in some suitable material and signage, so that they are visible from the ground or from the air, depending on the mapping methodology. The control points are placed manually, with personnel going to the study site where their establishment and measurement takes place. This process, as it often involves extensive, hard-to-access, dangerous, inaccessible, or rugged areas, significantly limits the optimal result of the mapping products produced, putting at risk and significant delays to the staff and the entire mission.

More specifically, one of the most frequently used methodologies of geometric documentation - mapping is that of photogrammetry. Photogrammetry is based on the now digital processing of overlapping images to produce cartographic products. By mean of the internal and external orientation of the image system, the imaging medium (e.g. camera) and the object to be mapped, the variation due to differential acquisition of the images from a different point in space is estimated, resulting in the reconstruction of the geometry and the three-dimensional form of the depicted object. Linking this three-dimensional model to a reference frame and estimating its scale, historically called "absolute orientation", uses control points. Photogrammetry is a one-way street in cases where large areas are covered for geomorphological mapping and/or where detail is required during mapping, such as in the case of monuments. It is implemented in applications for mapping the morphology of study areas with unmanned vehicles (drones, or UAV - Unmanned Aerial Vehicles), helicopters, aircraft, special structures (e.g. balloons) and satellites. In the methodology of photogrammetry, overlaid images are taken for the study area, and then with appropriate computational processing the 3D form of the study area is reconstructed, and additional photogrammetric products (e.g. orthophotographs, orthophotomaps, etc.) are obtained. The *a priori* existence of control points during the process of imagery acquisition offers the possibility to reduce the 3D space to a local, national or global coordinate system. This reduction is called georeferencing. Georeferencing is the most important mapping process required by law, for example in land registry or rezoning applications, as it accurately places e.g. a property in a global database, thus being the main way of securing citizens' or government property and land use. Without georeferencing, there are no correct cadastral maps, and there are many problems and disputes over the location of properties between the parties involved. The positioning and measuring of control points is often demanding, time-consuming or even impracticable. For example, when surveying an area of interest with dimensions of 500m x 500m, the engineer has to place a series of control points at regular spatial intervals to cover the area, based on some general rules of point placement (known as Von Gruber locations). The rules include the fact that the points must be placed far apart from each other and cover the whole area and at different elevation levels, so they must not be too close together, must not be co-extensive, nor define a plane in space. In reality there are many cases where the existence of inaccessible areas, e.g. due to the presence of barbed wire or steep slopes, or the presence of rocks, vegetation, or bodies of water, or inaccessible roofs on buildings to be surveyed, makes it impossible to position control points correctly. Similarly, the ruggedness of an area, or its size, creates the need for the engineering crew to work extensively to access the areas where the points are to be placed regardless of whether there are roads, steep slopes, or obstructions in the study area. The solution is the time-consuming placement of control points, or even the inability to place them at the optimally desired points on the surface to be surveyed. The result is that time is lost, the accuracy of the mapping result is reduced, and the mapping crew is put at risk. In addition, it is important to mention that the inaccurate placement and measurement of control points not only affects the quality of the georeferencing in the coordinate system to which the mapping is referenced, resulting in a shift in the absolute position of the measured area relative to its actual position on the Earth, but it also affects the relative accuracy of the produced cartographic product by distorting the geometric data and relative positions of the mapping objects. In addition to photogrammetry, which is illustrated as one field of application, mapping, target positioning, Simultaneous Localization and Mapping, and navigation applications may use control points as appropriate.

The solutions proposed at the state of the art level for the placement of control points - GCPs, include the use of a) "natural" targets that already exist in the field during mapping (such as street intersections, corners of buildings or pavements, depending on the mapping scale) or b) artificial targets printed e.g. on paper, wood, metal, aluminium. In the first case, geodetic methodologies and instruments are used to determine the coordinates of natural targets, often including a GPS - GNSS (Global Positioning System - Global Navigation Satellite System) station. This requires the points to be accessible, as the GPS must be placed on the point, in order to take the measurement. Often, however, the areas to be mapped do not contain such visible points. Also the physical targets - control points are more difficult to be automatically identified by software or automatic recognition algorithms when processing the measurements and thus a lot of time has to be spent in desk work to manually locate and place them in the software. In the case of artificial, man-made targets, it is still necessary to take the measurement on the point, but after the photogrammetric survey process by airplane, drone, or satellite, the site must be revisited to collect the points. As mentioned, in the natural terrain there are rugged, dangerous, remote, and inaccessible points, so the above process has serious limitations, as the placement of points in specific geometries is important to achieve the optimal precision result. There is also the risk of changing the position of the placed control points due to weather conditions, instability of the targets, or due to the passing of animals, or even the human factor. For this aspect of photogrammetric mapping, there is no alternative procedure in terms of quality and accuracy of the mapping result.

From research that has been done, companies have been found that manufacture targets with properties of good visual recognition (strong contrast), good geometric stability (choice of suitable materials, e.g. aluminium), or capable of automatic recognition with coded modulation (change in target shape with corresponding mapping to predefined point codes), or with limited capabilities (simple mounting or integration of a GPS receiver). The above solutions are not fully applicable to the majority of mapping cases, do not solve the problem of the difficulty of positioning and have essentially different or complementary scope. Also, some solutions have appeared with non-flying and non-autonomous targets that need a means (such as a drone) to transport and position them. These solutions, described in document CN 109211200 A 20190115, have a different application and do not provide a substantial solution to the problem of correct positioning and tracking of targets. In conclusion, although there is a correlation in terms of constructing and sharing targets for other applications, none of the advantages of the proposed invention are substantially achieved.

The disadvantages of the solutions proposed by the current technique include:
- Time-consuming targeting process;
- Inability to be placed in difficult places;
- Reduction of the accuracy of measurements and results due to the selection of suboptimal control point geometries. The result implements maps and diagrams that are unreliable in terms of quality, resulting in legal issues concerning, for example, the litigation of property owners as to property boundaries, the stability of road slopes, the possibility of an accident during the course of a train, or even the compensation of neighboring properties and optimization of excavations during the opening of a road;
- Possible environmental contamination from remaining targets;
- Possible movement of targets depending on weather conditions, resulting in the need to redo the work, or to produce cartographic products that will create legal, ownership, or environmental problems;
- Danger to humans due to mandatory access to dangerous areas, e.g. with steep slopes;
- Increased costs of the mapping process, as it requires travelling to remote areas;
- Increased environmental footprint due to constant travel and transport of the mapping crew.

The present invention recommends a swarm of unmanned vehicles (or unmanned systems or drones) following specific interventions to achieve optimal and easy allocation, measurement and recall of control points in mapping applications by performing steps of a specific method of sharing control points. Unmanned vehicles are designed to be autonomous targets or carry an implemented autonomous targeting system and all act together as a swarm. Thus each unmanned vehicle shall be implemented with the following characteristics:
1) Integration of a marked target into the unmanned vehicle, or implementation of an algorithm to integrate the unmanned vehicle itself as a target;
2) Correlation of the satellite positioning system - GNSS with the target centre;
3) Implementation of gradual stacking array of unmanned targets.

During the field mapping process, the following method steps are followed to share control points:
1) The unmanned vehicle swarm has received information about the coverage area during the preparation process;
2) Vehicles are called either automatically or using a navigation system to approach the optimal positioning positions from the air;
3) Vehicles are landed in sections by the operator at the respective location;
4) Their positioning system is activated;
5) During the execution of photogrammetry (or any other mapping, navigation, or coordinate determination procedure using control points) the targets - control points remain active and monitor the quality of their measurements and if necessary notify or store for information about accuracy problems;
6) When the process is finished, they return autonomously or with the help of an operator to the area of the original base of the mission or to another designated area;
7) Target data is stored and available for users to use algorithms and software of their choice to further solve the photogrammetric or other process.

The advantages of the invention over the aforementioned disadvantages include:
- Faster targeting process as the operator can be located at a specific point kilometres away from the application point;
- Possibility of installation in inaccessible places, for example through fences, on building roofs, etc.;
- Increased accuracy due to the correct choice of the location and geometry of the control points and at different altitudes;
- Automatic recovery of targets resulting in ecological reuse and no residues deposited in the environment;
- Receive correct updated coordinates even after possible movement of targets;
- Avoiding risks to human access to dangerous places such as, steep slopes;
- Reduction of costs and environmental footprint as there is no need to travel to remote areas;
- Cost reduction as targets - control points can be placed simultaneously.

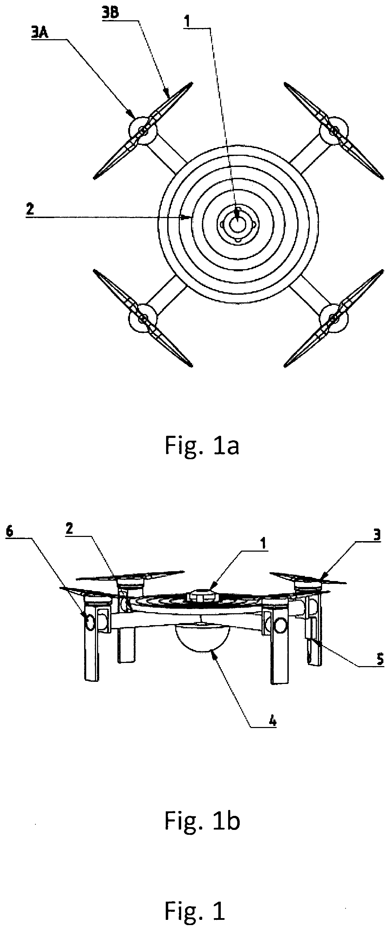

Figure 1 shows the unmanned vehicle consisting of a skeleton of appropriate dimensions carrying equipment, in plan view (Fig. 1a) and in side view (Fig. 1b).

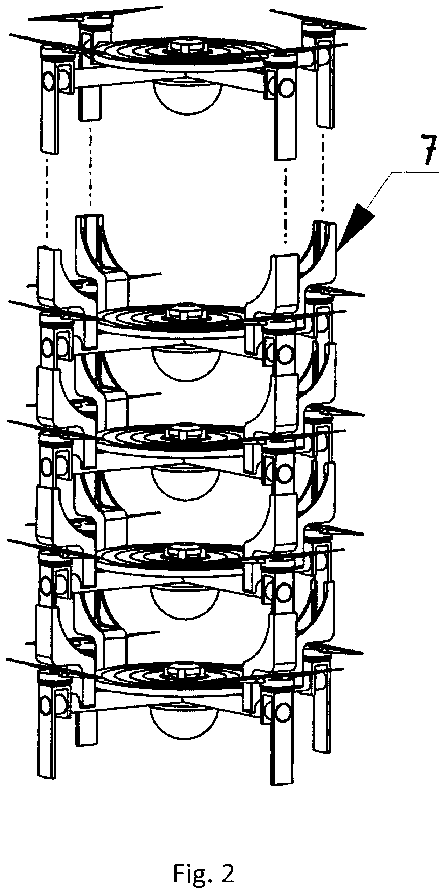

The swarm system of unmanned flying vehicles are used as control points of known geodetic coordinates to support precision mapping applications As illustrated in Fig. 2, the unmanned vehicles - control points, can be placed on top of each other for ease of transport-storage and with the help of connecting pieces. The connector assembly may be placed on the ground as is, and the unmanned vehicles may be taken off the array, one after the other.

Unmanned vehicles shall be implemented on the basis of the following options: (a) they shall be built from the outset incorporating targets as control points and/or using the format of the unmanned vehicle as a target; or (b) targets - control points shall be added as a second phase on board the unmanned vehicles. In either case the unmanned vehicles may be of any shape, size, number of motors and general architecture. The choice of the size of the targets as control points shall also depend on the scale and scope of the cartographic study in question. Thus an indicative selection of unmanned vehicle morphology is presented, as shown in Figure 1. The unmanned vehicle shall consist of: a skeleton of appropriate dimensions carrying the equipment, consisting at least of the Global Navigation Satellite System (GNSS) antenna (1) through which the position of the unmanned vehicle and hence of the target (1) is calculated (with appropriate use or support depending on the intended accuracy, e.g. RTK or using other positioning methodologies, e.g. SLAM algorithms); the circular target (2) which may vary in shape and size (e.g. square, ArUco marker, etc.) and depending on the unmanned vehicle and mapping application, with an indicative diameter of 20cm; the four rotirs (3) which may be more or less; the camera (4) or other system, which assists in the navigation, control and landing of the unmanned vehicle (4); the 2.4GHz/433MHz RC/telemetry unit (5) (indicative but not exclusive); and the navigation lighting (6) (which is mandatory by law but not essential for implementation). The other components of the unmanned vehicle, whether mandatory or not, are not presented exhaustively for reasons of non-absolute relevance to the subject matter of the invention. Indicative examples include the flight control system, batteries or any energy conversion/transfer source or system, the camera control and stabilization system (gimbal), etc.

The frame in this illustrative form consists of X-shaped carbon fibre tubes, which at their ends are equipped with fasteners that act as bases for the engines, landing legs and, with the help of connecting pieces (7), allow the unmanned vehicles to rest on each other for storage (stacking) as illustrated in Figure 2. Any frame of suitable dimensions, bearing the selected target dimension, may be used for the frame. To operate the unmanned vehicle, a 2.4GHz remote control (Remote Controller/RC indicative) is used for direct manual control by the user and a control station for automated control and GNSS data reception. The control station shall consist of an indicative common laptop computer with appropriate equipment, e.g. 433MHz telemetry transceiver and an appropriate GNSS antenna/base station (indicative).

In the process of using the unmanned vehicle as a control point, the following actions shall be taken, listed here as steps of the control point sharing method:
a) The study area is defined by the office or defined in the field by entering coordinates or positions on a map in software that anyway accompanies unmanned systems used in mapping. Thus, all unmanned vehicles have received information on the coverage area before take-off;
b) This sharing is done with one of the known position allocation algorithms, in order to approximate the optimal positioning locations from the air (e.g. by means of k-means analysis, triangulated irregular networks, etc.);
c) The user directs the unmanned control point vehicles to their positions either manually via the remote control, or autonomously (indicatively via the control station and telemetry), having allocated space at the selection coordinates, and the vehicles are landed in sections by the operator at the respective location and the ability to communicate seamlessly is checked;
d) The system shall be activated to accurately determine the position of unmanned vehicles - control points to be recorded as a control point;
e) During the photogrammetry process, the targets - control points remain active and monitor the quality of their measurements and, if necessary, alert or store to inform in case of accuracy problems;
f) When the photogrammetric acquisition process is completed, by selection at the base station or the controller, the unmanned vehicles - control points shall return autonomously or with the assistance of an operator to the area of the initial base of the mission or to another designated area;
g) The target data have been stored and are available for users to use algorithms and software of their choice to further resolve the photogrammetric process.

The invention finds application in all cases of photogrammetric or precision mapping or navigation and/or determination of coordinates of targets or objects using targets and control points, such as for example in the following objects: geotechnical studies, assessment of earthworks volumes, engineering works, study of monument geometry, excavation of trenches, roads and tunnels, slope stability, environmental monitoring, sound agricultural policy, assessment of natural and man-made disasters, siting of renewable energy structures, cadastral mapping, robotics, navigation, targeting applications, defence applications, topographic applications, mapping of areas without satellite coverage, and other fields where the determination of target coordinates, navigation, monitoring and georeferencing of areas of interest is required.

## Claims

1. An unmanned aerial vehicle-drone swarm system **characterized in that** it carries, identifies, controls, determines and communicates known geodetic coordinates to support precision mapping applications **and in that each unmanned vehicle in the swarm includes**
a frame of appropriate dimensions carrying the equipment, which shall include:
- at least one GNSS antenna (1), or other positioning system;
- a target (2) in any format or size proportional to the unmanned vehicle and with the mapping application;
- a series of rotors (3) or other system for flight and navigation;
- a camera (4) for navigation, control and landing, or other navigation assistance system;
- means of communication (5) with the base, such as an RC/telemetry unit.

2. A swarm system according to claim 1, **characterized in that** each unmanned vehicle in the swarm includes navigation lighting (6).

3. A swarm system according to claim 1, **characterized in that** it has the appropriate slots to stack for the transport or take-off procedure.

4. A method of sharing control points for precision topography mapping using the unmanned vehicle swarm of claims 1-3, **characterized in that it comprises the following steps:**
a) defining a study area, in advance or in the field, by entering coordinates or positions on a map into mapping software, which is linked to the cluster and updates it;
b) partitioning of the mapping area, using one of the known position allocation algorithms, in order to approach from the air the optimal positioning positions of the unmanned vehicles - control points, transfer of the unmanned vehicles manually by remote control, or autonomously to the horizontal positioning positions;
c) partial landing by the pilot or autonomously at the appropriate location and check for unobstructed communication capability;
d) activation of the system for the precise positioning of each unmanned vehicle control point and recording of their coordinates as control points;
e) when carrying out photogrammetry, or other mapping process using control points, unmanned vehicles - control points shall monitor the quality of their measurements, with the possibility of alerting to accuracy problems and storing data on the quality of the measurement;
f) when the process is completed, returning the unmanned vehicles control points autonomously or with the assistance of a pilot to the area of the initial base of the mission or to another designated area;
g) the target data shall be stored and made available to users to use algorithms and software of their choice to further resolve the photogrammetric process.

5. Use of an unmanned vehicle implementing the method of claim 4 and **characterized in that** it functions as a control point and assists mapping, navigation or targeting methodologies by linking measurements to a given reference system and/or improving the results of mapping, or coordinate determination, or positioning.
